# EUROPÄISCHE PATENTSCHRIFT

(11) **EP 1 683 704 B1**
(45) Veröffentlichungstag und Bekanntmachung des Hinweises auf die Patenterteilung: **27.02.2013**
(21) Anmeldenummer: 05112292.7
(22) Anmeldetag: 16.12.2005
(51) Int. Cl.: B62D 5/04

(54) **Lenkzusatzeinrichtung**
Additional steering system
Système de direction supplémentaire

(30) Priorität: 21.12.2004 US 19482
(43) Veröffentlichungstag der Anmeldung: 26.07.2006
(73) Patentinhaber: Deere & Company, Moline, IL 61265-8098 (US)
(72) Erfinder: Nelson, Frederick W, 50263, Waukee (US)
(74) Vertreter: Holst, Sönke

(56) Entgegenhaltungen:
- EP-A- 0 762 253
- EP-A- 1 170 651
- DE-A1- 4 101 810
- DE-A1- 19 738 763
- DE-B1- 2 925 156
- US-A1- 2001 054 519

## Beschreibung

Die Erfindung betrifft eine Lenkzusatzeinrichtung zur nachträglichen Umwandlung eines manuell lenkbaren geländegängigen Fahrzeugs mit einer Lenksäule und einem an einer drehbaren Lenkwelle angebrachten Lenkrad in ein wahlweise automatisch lenkbares Fahrzeug, so dass das Fahrzeug wahlweise in einem manuellen Lenkmodus und einem automatischen Lenkmodus lenkbar ist, wobei die Lenkzusatzeinrichtung ein Rad, das an einer vom Lenkrad beabstandeten Stelle drehbar mit der Lenkwelle verbindbar ist, einen Motor, eine Antriebsverbindung zwischen dem Motor und dem Rad, sowie einen Prozessor umfasst, der mit dem Motor und einer Positionssensoranordnung verbunden ist, die Signale von einer oder mehreren beabstandeten Stellen empfängt.

Gegenwärtig verfügbare automatische Lenksysteme für geländegängige Fahrzeuge, wie zum Beispiel das kommerziell verfügbare selbsttätige Lenksystem Greenstar Auto Trac von John Deere für Traktoren, benötigen typischerweise ein zusätzliches elektrohydraulisches Lenksteuersystem, um mit dem Lenksystem des Fahrzeugs zu interagieren. Eine Kombination aus Signalen von einem GPS-System und Signalen von an Bord befindlichen Sensoren wird verarbeitet, um eine automatische Lenkung des Fahrzeugs bereitzustellen. Ein elektrohydraulisches Ventil, ein Winkelsensor für das gelenkte Rad und ein Bewegungssensor für einen Bedienerlenkeingriff sind notwendig, um das Zusammenwirken des manuellen Lenksystems mit dem automatischen System zu steuern. Ein derartiges automatisches System erfordert eine mehrstündige Installation und erfordert Kenntnisse der Lenksysteme, der Hydraulik und der Elektrik des Fahrzeugs. Das automatische System muss spezifisch an das jeweilige Lenksystem des Fahrzeugs angepasst werden. Die Verwendung des Systems kann bei einigen Fahrzeugen eingeschränkt sein, wie bei solchen mit hydraulischen Zweiwegelenkungen. Manche Typen automatischer Lenksysteme, wie beispielsweise in der US 5 234 070 gezeigt, erfordern eine spezielle Kupplung, die in einem der Lenkmodi ausgekoppelt ist. Viele Systeme erfordern einen separaten Winkelsensor für das gelenkte Rad.

Bei einer anderen Art automatischer Lenksysteme (US 5 121 799 A) ist ein mit dem Lenkrad im Eingriff stehender Reibungsantrieb an der Lenksäule abgestützt. Eine derartige, hinzuzufügende Einheit fügt sich oft nicht besonders gut in das System ein und die offene Reibungsantriebsanordnung bietet Punkte, an denen sich Gegenstände verklemmen können und ist sowohl am Lenkrad als auch am Reibungsantrieb Verschleiß ausgesetzt. Jeglicher Schlupf im Antrieb kann eine Instabilität im Lenksystem bedingen und die Genauigkeit der Lenkung nachteilig beeinflussen.

Im Stand der Technik wurden auch Lenksysteme beschrieben, bei denen ein Motor über ein Zahnrad ein mit der Lenkwelle verbundenes Zahnrad antreibt. Derartige Lenksysteme arbeiten mit Sensoren zur Erfassung von Pflanzenreihen (FR 2 727 276 A) oder mit Fernbedienungen (DE 93 14 133 U, DE 196 03 404 A) und eignen sich zumindest nicht als universelle automatische Lenksysteme zur Unterstützung eines Fahrers. Bei der DE 93 14 133 U wird die Antriebsverbindung zwischen dem Motor und der Lenkwelle im manuellen Betrieb gelöst, während ein manueller Betrieb in der DE 196 03 404 A nicht erwähnt wird.

Die DE 29 25 156 B1 beschreibt eine zu Versuchszwecken montierbare Einrichtung zum Lenken eines Fahrzeugs, die eine Welle umfasst, welche zwischen einer Lenkwelle und einem Lenkhandrad des Fahrzeugs montiert wird. Koaxial zur Welle ist ein Motor angebracht, der zur automatischen oder ferngesteuerten Lenkung des Fahrzeugs dient. Ein Winkelsensor ist über ein Zahnradgetriebe mit der Welle gekoppelt.

In der DE 197 38 763 A1 wird ein wahlweise manuell oder automatisch lenkbares Fahrzeug beschrieben. Ein Sensor erfasst das Drehmoment an der Lenkwelle, anhand dessen eine Schalteinheit zwischen der automatischen und einer manuellen Lenkungsbetriebsart umschaltet.

Die DE 41 01 810 A1 schlägt eine Hilfskraftlenkung für Fahrzeuge vor, bei der ein Servomotor innerhalb des Fahrgastraums angeordnet ist und über Zahnräder die Lenkwelle antreibt.

Das der Erfindung zu Grunde liegende Problem wird darin gesehen, ein nachträglich einbaubares automatisches Lenksystem bereitzustellen, das auf unproblematische Weise einen automatischen und einen manuellen Betrieb ermöglicht.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Die Lenkzusatzeinrichtung eignet sich zur Umwandlung eines konventionellen Lenksystems eines geländegängigen Fahrzeugs in ein automatisches Lenksystem, das von einer oder mehreren beabstandeten Stellen Signale empfängt. Es umfasst ein Rad auf der Lenkwelle, das über eine Antriebsverbindung, die vorzugsweise einen Riemen oder eine Kette umfasst, mit einem Motor verbunden ist. Der Motor wird durch einen Prozessor gesteuert, der Positionssignale empfängt und bewegt sich sowohl im automatischen als auch im manuellen Lenkmodus gemeinsam mit der Lenkwelle. Der Prozessor gibt im automatischen Lenkmodus ein Lenksignal an den Motor ab, um die Lenkwelle um einen vorbestimmten Betrag zu drehen. Der Prozessor reagiert auf eine Abweichung zwischen dem vorbestimmten Betrag und einer tatsächlichen Drehung der Lenkwelle, um den Lenkmodus aus dem automatischen in den manuellen Lenkmodus wechseln zu lassen.

Ein Kodierer beaufschlagt den Prozessor mit einem Signal, das den Betrieb in den manuellen Modus übergehen lässt, wenn die vom Kodierer berichtete Anzahl der Schritte des Schrittmotors von der erwarteten Zahl abweicht.

Die erfindungsgemäße Lenkzusatzeinrichtung mit einem austauschbaren Lenkrad, einem mit der Lenkwelle verbindbaren ersten Rad und einem Motor kann leicht an einer Lenkwelle befestigt werden und fügt sich sowohl funktionell als auch ästhetisch gut in viele geländegängige Fahrzeuge ein. Die Lenkzusatzeinrichtung kann an einem breiten Bereich an Fahrzeugen befestigt werden, die unterschiedliche Typen hydraulisch oder mechanisch unterstützter Lenksysteme aufweisen. Sensoren für den Winkel der gelenkten Räder und Sensoren zur Feststellung, ob der Bediener das Lenkrad manuell bewegt hat oder nicht, werden nicht benötigt. Das Signal vom Kodierer hinsichtlich des Winkels des Lenkrads stellt eine Rückkopplung für den Lenkwinkel bereit ohne Bedarf an zusätzlichen Sensoren und ist für Kontrollalgorithmen nützlich, um die Leistung, Zuverlässigkeit und Stabilität des Fahrzeugs zu verbessern.

Die Anbringung des Motors und der Räder nahe des oberen Endes der Lenkwelle ermöglicht eine bequeme Anbringung.

Es können Einsätze zur Anpassung der Lenkzusatzeinrichtung bereitgestellt werden, um die jeweilige Lenkwelle an das Rad anzupassen. Bei einer anderen Ausführungsform kann der Motor ohne zusätzlichen Antrieb direkt am Ende der Lenkwelle befestigt werden.

Bei einer Ausführungsform werden dem Prozessor Geländekompensationssignale bereitgestellt, um die Lenkleistung weiter zu erhöhen. Eine weitere Verbesserung umfasst die Bereitstellung einer elektronischen Lenksystemeinheit mit dem Kodierer direkt am Motor, um das System leicht an einer CAN-Verdrahtung des Fahrzeugs mit einem Minimum an Hardware anschließen zu können.

In den Zeichnungen sind zwei nachfolgend näher beschriebene Ausführungsbeispiele der Erfindung dargestellt. Es zeigt:
- Fig. 1: eine schematische Wiedergabe einer Lenkzusatzeinrichtung zur Umwandlung manueller Lenksysteme in ein automatisches System,

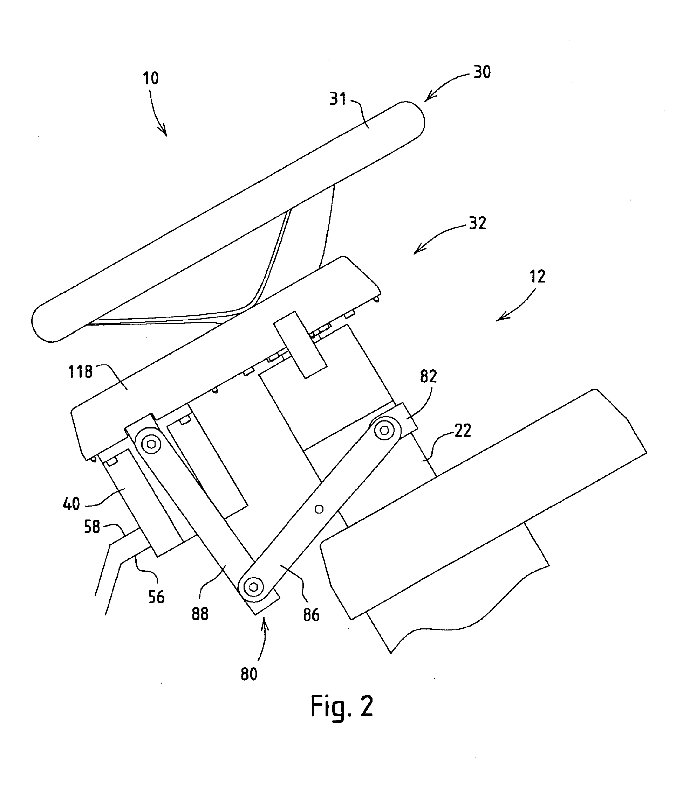

- Fig. 2: eine Seitenansicht der Lenkzusatzeinrichtung und der Befestigungsanordnung,
- Fig. 3: eine Explosionsansicht der Lenkzusatzeinrichtung aus Figur 2, und
- Fig. 4: eine perspektivische seitliche Ansicht einer anderen Ausführungsform, die einen direkt an der Lenkwelle angebrachten Lenkmotor zeigt.

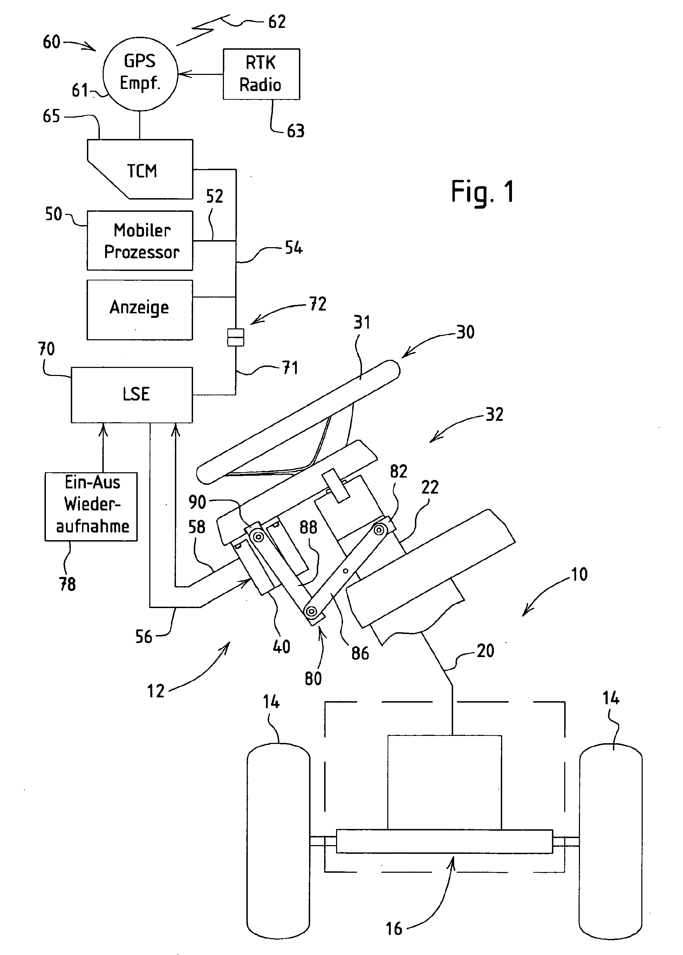

Es wird nun auf die Figur 1 verwiesen, in der ein geländegängiges Fahrzeug 10, wie ein Traktor oder ein Nutzfahrzeug gezeigt wird, das einen Bedienerarbeitsplatz 12 aufweist und durch lenkbare Räder 14 zur Bewegung über den Erdboden abgestützt wird. Die Räder 14 sind mit einem konventionellen Lenkmechanismus 16 verbunden, der eine drehbare Lenkwelle 20 umfasst, die innerhalb einer Lenksäule 22 abgestützt ist, die sich am Bedienerarbeitsplatz 12 nach oben erstreckt. Ein Lenkrad 30 mit einem Handhabungsabschnitt 31 ist am oberen Ende der Welle 20 abgestützt, damit der Bediener daran zwecks manuellen Lenkens eingreifen kann. Das Fahrzeug 10 weist in der Regel weitere, nicht gelenkte Räder auf.

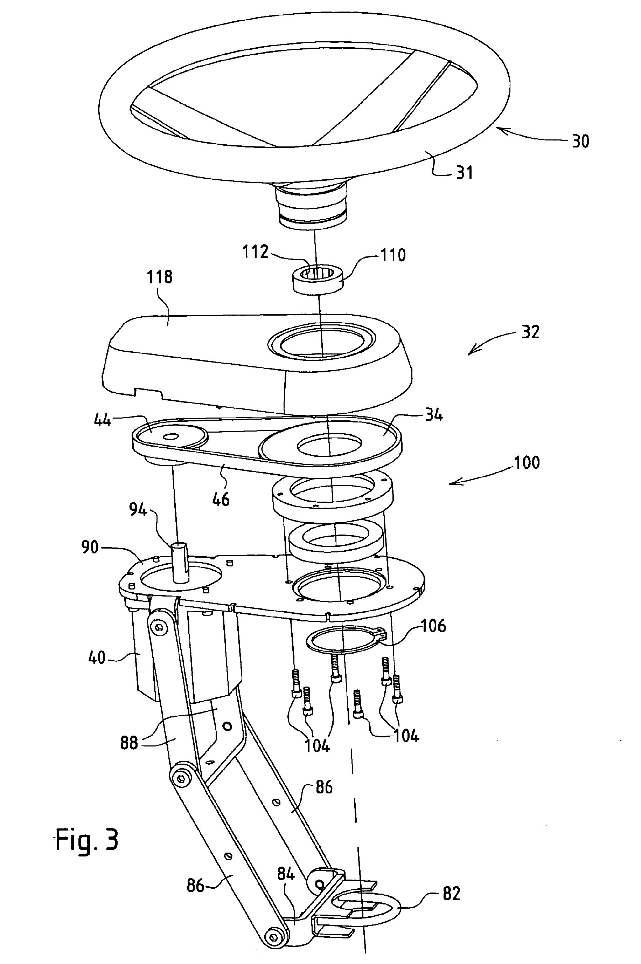

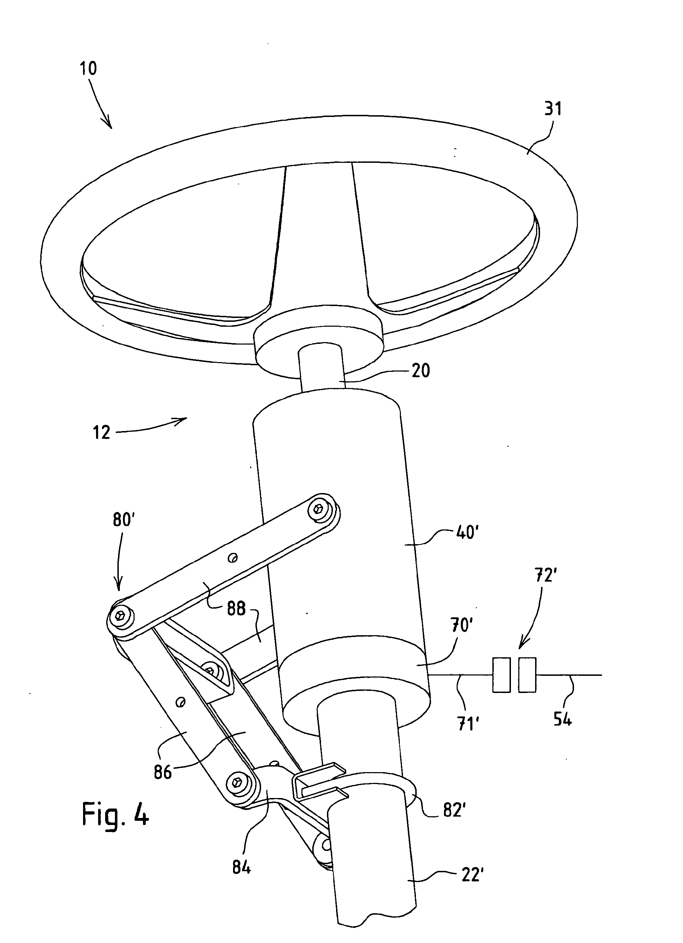

Wie dargestellt, ist das Lenkrad 30 Teil einer Lenkzusatzeinrichtung, die insgesamt mit 32 gekennzeichnet ist, um eine automatische Lenkfunktion an einem Fahrzeug bereitzustellen, das normalerweise nur mit einer manuellen Lenkmöglichkeit versehen ist. Alternativ kann das ursprüngliche Lenkrad des Fahrzeugs an der Lenkzusatzeinrichtung 32 befestigt werden. Ein erstes Rad 34 (s. Figur 3) ist an einer der Verbindung des Lenkrads 30 mit der Lenkwelle 20 benachbarten Stelle mit der Lenkwelle 20 verbunden und dreht sich gemeinsam mit der Lenkwelle 20 um deren Achse. An der Lenksäule 22 ist ein Motor 40 abgestützt. Ein zweites Rad 44 stellt eine Antriebsverbindung zwischen dem Motor 40 und dem Rad 34 her. Wie dargestellt, sind die Räder 34 und 44 durch eine Kette, einen konventionellen Treibriemen oder ein anderes flexibles Zugmittel 46 untereinander verbunden. Es können jedoch andere Typen von Antrieben wie Reibrad- oder Zahnradantriebe verwendet werden. Außerdem kann, wie bei der in Figur 4 dargestellten Ausführungsform ein Motor 40' am Ende der Lenkwelle 20 befestigt werden, um die Lenkwelle 20 an einer vom Handhabungsabschnitt 31 versetzten Stelle direkt anzutreiben.

Ein mobiler Prozessor 50 ist auf dem Fahrzeug 10 angeordnet und umfasst einen Steuerausgang 52, der über ein CAN-Kabel 54 mit einem Eingang 56 des Motors 40 verbunden ist. Ein Positionsrückkopplungsausgang 58 des Motors 40 ist mit einem Eingang des Prozessors 50 verbunden. Wie dargestellt, ist der Motor 40 ein elektrischer Schrittmotor und der Rückkopplungssensor für den Positionsrückkopplungsausgang 58 ist ein am Motor 40 angeordneter Kodierer und stellt über eine Rückkopplungsleitung 58 ein Signal bereit, das auf die Anzahl der Schritte hinweist, um die sich der Motor 40 bewegt hat. Der Motor 40 bleibt sowohl in einem manuellen Lenkmodus als auch in einem automatischen Lenkmodus in einer Antriebsverbindung mit der Lenkwelle 20, so dass der Kodierer in der Lage ist, in beiden Modi dem Prozessor 50 ein Lenkwellenpositionssignal bereitzustellen.

Der Prozessor 50 ist mit einer in der Figur 1 insgesamt mit 60 gekennzeichneten Positionssensoranordnung verbunden, wie beispielsweise einem Sensor des globalen Positionssystems (GPS) mit einem Empfänger 61, der Signale 62 von einer oder mehreren beabstandeten Stellen empfängt. Zusätzliche Korrektureingaben, wie von einer Echtzeitkinematik (RTK) in Form einer bodenbasierenden Differenzialkorrektureingabe können von einem Echtzeitkinematikradio 63 bereitgestellt werden, und eine Geländekompensationsmoduleingabe kann von einem Geländekompensationsmodul (TCM) 65 bereitgestellt werden. Das Geländekompensationsmodul korrigiert GPS-Daten hinsichtlich des Gier- und Rollwinkels, wenn das Fahrzeug 10 sich über unebenes Gelände bewegt.

Die Positionssensoranordnung 60 ist über das CAN-Kabel 54 mit einem Eingang des Prozessors 50 verbunden. Eine Lenksystemeinheit (LSE) 70 ist über ein CAN-Kabel 71 und einen Systemverbinder 72 mit dem CAN-Kabel 54 verbunden. Die Lenksystemeinheit 70 empfängt Steuerinformationen vom mobilen Prozessor 50 und Positionsrückkopplungsinformation über eine Leitung vom Positionsrückkopplungsausgang 58 vom Kodierer des Motors 40. Ein Schalter 78 mit Positionen für Ein, Aus und Wiederaufnahme ist mit der Lenksteuereinheit 70 verbunden.

Der Prozessor 50 stellt die Position des Fahrzeugs 10 fest und vergleicht sie mit einer gewünschten Position und einem beabsichtigten Weg des Fahrzeugs 10. Ein Fehlersignal wird erzeugt und der Motor 40 wird aktiviert, um sich abhängig vom Fehlersignal um eine gewünschte Anzahl an Schritten zu bewegen. Nachweisgeräte, wie ein Detektor für die Bodengeschwindigkeit und seitliche Geschwindigkeit stellen vom Prozessor 50 verwendete Signale bereit, um die Genauigkeit des automatischen Lenksystems zu verbessern.

Wenn die vom Kodierer des Motors 40 berichtete Anzahl an Schritten außerhalb eines vom Prozessor 50 erwarteten Bereichs ist, nimmt das Lenksystem an, dass der Bediener die Kontrolle übernehmen will und schaltet dem Motor 40 den Strom ab. Der Strom für den Motor 40 wird auch unterbrochen, wenn der Kodierer feststellt, dass eine Bewegung des Lenkrads 30 vorhanden ist, wenn durch den Prozessor 50 keine Positionsänderung verlangt wurde.

Eine Adapterhalterung 80 (80' in Figur 4) verbindet den Motor 40 mit der Lenksäule 22 oder einer anderen geeigneten Stelle nahe des oberen Endes der Lenksäule 20. Die Adapterhalterung 80 umfasst eine U-förmige Klemme 82, die an der Lenksäule 22 befestigt ist und einen Armträger 84 hält, der schwenkbar mit den Enden eines Paars von Armen 86 verbunden ist. Ein zweites Paar an Armen 88 ist mit gegenüber liegenden Enden der Arme 86 verbunden und trägt eine Motorhalterung 90. Der Schrittmotor 40 ist mit der Motorhalterung 90 verschraubt und umfasst eine Antriebswelle 94, die das Rad 44 aufnimmt. Das Rad 34 ist auf der Motorhalterung 90 durch eine Einlage- und Trägerstruktur 100 drehbar abgestützt, die durch Schrauben 104 und einen Einschnappring 106 befestigt ist. Ein austauschbarer Einsatz 110 ist innerhalb der Einlage- und Trägerstruktur 100 gemeinsam mit dem oberen Ende der Lenkwelle 20 und dem Rad 34 drehbar aufgenommen. Der Einsatz 110 hat eine innere Konfiguration 112, die angepasst ist, auf dem kerbverzahnten oder ausgekehlten Ende der Lenkwelle 20 des jeweiligen Fahrzeugs aufgenommen zu werden, das in ein automatisch lenkbares Fahrzeug umgewandelt wird. Eine Abdeckung 118 ist an der Motorhalterung 90 befestigt und umschließt die Räder 34, 44 im Wesentlichen. Die Lenkzusatzeinrichtung 32 kann einfach positioniert werden, indem die Klemme 82 an einer ausgewählten Position angebracht wird und die Arme 86, 88 verschwenkt werden. Sobald die Lenkzusatzeinrichtung 32 richtig positioniert ist und sich der Einsatz 110 über der Lenkwelle 20 befindet, kann die Adapterhalterung 80 an einer festen Oberfläche verankert werden, um eine Drehung der Lenkzusatzeinrichtung 32 zu vermeiden.

Bei der in der Figur 4 dargestellten Ausführungsform ragt die Lenkwelle 20 durch den Motor 40' bzw. ein den Motor enthaltendes Gehäuse. Der Motorantrieb kann einen austauschbaren Einsatz umfassen, der im Wesentlichen dem in der Figur 3 gezeigten Typ entspricht, um unterschiedliche Lenkwellenkonfigurationen aufzunehmen. Unterschiedliche Typen und Konfigurationen von Motoren 40' einschließlich flacherer, axial kompakter Motoren können verwendet werden. Wie in der Figur 4 gezeigt, kann die Lenksteuereinheit 70' direkt am Motor angebracht werden, wobei der Kodierer und das CAN-Kabel 71' bei 72' mit dem CAN-Kabel 54 verbunden sind, wodurch die Menge an zur Umwandlung erforderlicher Hardware minimiert wird.

### Figurentexte

### Fig. 1

- 50: Mobiler Prozessor
- 61: GPS-Empf.
- 63: RTL-Radio
- 70: LSE
Display = Anzeige
- 78: Ein-Aus-Wiederaufnahme

## Patentansprüche

1. Lenkzusatzeinrichtung (32) zur nachträglichen Umwandlung eines manuell lenkbaren geländegängigen Fahrzeugs (10) mit einer Lenksäule (22) und einem an einer drehbaren Lenkwelle (20) angebrachten Lenkrad (30) in ein wahlweise automatisch lenkbares Fahrzeug (10), so dass das Fahrzeug wahlweise in einem manuellen Lenkmodus und einem automatischen Lenkmodus lenkbar ist, wobei die Lenkzusatzeinrichtung (32) ein Rad (34), das an einer vom Lenkrad (30) beabstandeten Stelle drehbar mit der Lenkwelle (20) verbindbar ist, einen Motor (40), eine Antriebsverbindung zwischen dem Motor (40) und dem Rad (34), sowie einen Prozessor (50) umfasst, der mit dem Motor (40) verbunden ist, **dadurch gekennzeichnet, dass** der Prozessor (50) mit einer Positionssensoranordnung (60) verbunden ist, die Signale (62) von einer oder mehreren beabstandeten Stellen empfängt, dass die Antriebsverbindung zwischen dem Motor (40) und dem Rad (34) auch im manuellen Lenkmodus erhalten bleibt, dass der Prozessor (50) im automatischen Lenkmodus betreibbar ist, ein Lenksignal an den Motor (40) abzugeben, um die Lenkwelle (20) um einen vorbestimmten Betrag zu drehen, dass der Prozessor (50) auf eine Abweichung zwischen dem vorbestimmten Betrag und einer tatsächlichen Drehung der Lenkwelle (20) reagiert, um den Lenkmodus aus dem automatischen in den manuellen Lenkmodus wechseln zu lassen, dass ein Rückkopplungssensor mit dem Motor (40) verbunden ist und auf eine Drehung der Lenkwelle (20) durch einen Bediener reagiert, um dem Prozessor (50) im automatischen Lenkmodus einen Hinweis auf einen manuellen Eingriff des Bedieners zu geben, dass der Motor (40) ein Schrittmotor ist und dass der Rückkopplungssensor ein Kodierer an der Welle des Motors (40) ist.

2. Lenkzusatzeinrichtung (32) nach Anspruch 1, **dadurch gekennzeichnet, dass** das Rad (34) am oberen Ende der Lenkwelle (22) anbringbar ist.

3. Lenkzusatzeinrichtung (32) nach einem der vorhergehenden Ansprüche, **dadurch gekennzeichnet, dass** der Motor (40) und das Rad (34) mittels einer abnehmbaren Klemme (82) lösbar an der Lenksäule (22) anbringbar sind.

4. Lenkzusatzeinrichtung (32) nach einem der Ansprüche 1 bis 3, **dadurch gekennzeichnet, dass** das mit der Lenkwelle (20) verbindbare Rad (34) durch einen austauschbaren Einsatz (110) mit der Lenkwelle (20) verbindbar ist, welcher zur Befestigung des Rads (34) zur Anbringung an unterschiedlichen Lenkwellen (20) austauschbar ist.

5. Lenkzusatzeinrichtung (32) nach einem der vorhergehenden Ansprüche, **dadurch gekennzeichnet, dass** die Antriebsverbindung zwischen dem Motor (40) und dem Rad (34) eine Kette oder einen Riemen umfasst.

6. Lenkzusatzeinrichtung (32) nach einem der vorhergehenden Ansprüche, **dadurch gekennzeichnet, dass** der Prozessor (50) eine Korrektureingabe von einer Echtzeitkinematik (RTK) empfängt.

7. Lenkzusatzeinrichtung (32) nach einem der vorhergehenden Ansprüche, **dadurch gekennzeichnet, dass** der Prozessor (50) mit einem Geländekompensationsmodul (65) verbunden ist, das GPS-Daten hinsichtlich des Gier- und Rollwinkels korrigiert, wenn das Fahrzeug (10) sich über unebenes Gelände bewegt.

8. Fahrzeug (10) mit einer Lenkzusatzeinrichtung (32) nach einem der vorhergehenden Ansprüche.

## Claims

1. Additional steering system (32) for subsequently converting a manually steerable off-road vehicle (10) to a steering column (22) and a steering wheel (30) which is mounted on a rotatable steering shaft (20) into a vehicle (10) which can optionally be steered automatically, with the result that the vehicle can optionally be steered in a manual steering mode and an automatic steering mode, wherein the additional steering system (32) comprises a wheel (34) which can be rotatably connected to the steering shaft (20) at a location which is spaced apart from the steering wheel (30), a motor (40), a drive connection between the motor (40) and the wheel (34), and a processor (50) which is connected to the motor (40), **characterized in that** the processor (50) is connected to a position sensor arrangement (60) which receives signals (62) from one or more locations which are spaced apart, **in that** the drive connection between the motor (40) and the wheel (34) is maintained even in the manual steering mode, **in that** the processor (50) can be operated in the automatic steering mode in order to output a steering signal to the motor (40) so as to rotate the steering shaft (20) by a predetermined amount, **in that** the processor (50) reacts to a deviation between the predetermined amount and an actual rotation of the steering shaft (20) in order to cause the steering mode to change from the automatic steering mode into the manual steering mode, **in that** a feedback sensor is connected to the motor (40) and reacts to a rotation of the steering shaft (20) by an operator in order to provide the processor (50) in the automatic steering mode with an indication of a manual intervention by the operator, **in that** the motor (40) is a stepping motor, and **in that** the feedback sensor is an encoder on the shaft of the motor (40).

2. Additional steering system (32) according to Claim 1, **characterized in that** the wheel (34) can be attached to the upper end of the steering shaft (22).

3. Additional steering system (32) according to one of the preceding claims, **characterized in that** the motor (40) and the wheel (34) can be detachably attached to the steering column (22) by means of a removable clamp (82).

4. Additional steering system (32) according to one of Claims 1 to 3, **characterized in that** the wheel (34), which can be connected to the steering shaft (20), can be connected to the steering shaft (20) by a replaceable insert (110) which can be replaced for the purpose of fastening the wheel (34) in order to attach it to different steering shafts (20).

5. Additional steering system (32) according to one of the preceding claims, **characterized in that** the drive connection between the motor (40) and the wheel (34) comprises a chain or a belt.

6. Additional steering system (32) according to one of the preceding claims, **characterized in that** the processor (50) receives a correction input from real-time kinematics (RTK).

7. Additional steering system (32) according to one of the preceding claims, **characterized in that** the processor (50) is connected to an off-road compensation module (65) which corrects GPS data with respect to the yaw angle and rolling angle when the vehicle (10) is moving over uneven terrain.

8. Vehicle (10) having an additional steering system (32) according to one of the preceding claims.

## Revendications

1. Système de direction supplémentaire (32) pour la conversion ultérieure d'un véhicule (10) tout-terrain à direction manuelle comprenant une colonne de direction (22) et un volant de direction (30) monté sur un arbre de direction rotatif (20) en un véhicule (10) pouvant être dirigé automatiquement de manière sélective, de sorte que le véhicule puisse être dirigé de manière sélective dans un mode de direction manuelle et dans un mode de direction automatique, le système de direction supplémentaire (32) comprenant une roue (34) qui peut être connectée en un emplacement espacé du volant de direction (30) de manière rotative à l'arbre de direction (20), un moteur (40), une liaison d'entraînement entre le moteur (40) et la roue (34), ainsi qu'un processeur (50), qui est connecté au moteur (40), **caractérisé en ce que** le processeur (50) est connecté à un agencement de capteur de position (60) qui reçoit des signaux (62) provenant d'un ou de plusieurs emplacements espacés, **en ce que** la liaison d'entraînement entre le moteur (40) et la roue (34) reste établie même en mode de direction manuelle, **en ce que** le processeur (50) peut fonctionner en mode de direction automatique pour délivrer un signal de direction au moteur (40), afin de faire tourner l'arbre de direction (20) d'une valeur prédéterminée, **en ce que** le processeur (50) réagit à un écart entre la valeur prédéterminée et une rotation effective de l'arbre de direction (20) afin de permettre de faire passer le mode de direction du mode de direction automatique au mode de direction manuelle, **en ce qu'**un capteur de rétroaction est connecté au moteur (40) et réagit à une rotation de l'arbre de direction (20) par un opérateur afin de fournir au processeur (50) en mode de direction automatique une indication d'une intervention manuelle de l'opérateur, **en ce que** le moteur (40) est un moteur pas à pas et **en ce que** le capteur de rétroaction est un codeur sur l'arbre du moteur (40).

2. Système de direction supplémentaire (32) selon la revendication 1, **caractérisé en ce que** la roue (34) peut être montée sur l'extrémité supérieure de l'arbre de direction (22).

3. Système de direction supplémentaire (32) selon l'une quelconque des revendications précédentes, **caractérisé en ce que** le moteur (40) et la roue (34) peuvent être montés de manière détachable sur la colonne de direction (22) au moyen d'une pièce de serrage de serrage amovible (82).

4. Système de direction supplémentaire (32) selon l'une quelconque des revendications 1 à 3, **caractérisé en ce que** la roue (34) pouvant être connectée à l'arbre de direction (20) peut être connectée à l'arbre de direction (20) par un insert remplaçable (110), qui peut être remplacé pour la fixation de la roue (34) pour le montage sur différents arbres de direction (20).

5. Système de direction supplémentaire (32) selon l'une quelconque des revendications précédentes, **caractérisé en ce que** la liaison d'entraînement entre le moteur (40) et la roue (34) comprend une chaîne ou une courroie.

6. Système de direction supplémentaire (32) selon l'une quelconque des revendications précédentes, **caractérisé en ce que** le processeur (50) reçoit une indication de correction d'une cinématique en temps réel (RTK).

7. Système de direction supplémentaire (32) selon l'une quelconque des revendications précédentes, **caractérisé en ce que** le processeur (50) est connecté à un module de compensation de terrain (65), qui corrige des données GPS en fonction de l'angle de lacet et de roulis, lorsque le véhicule (10) se déplace sur un terrain inégal.

8. Véhicule (10) comprenant un dispositif de direction supplémentaire (32) selon l'une quelconque des revendications précédentes.
